# EUROPEAN PATENT APPLICATION

(11) **EP 4 144 947 A1**
(43) Date of publication of application: **08.03.2023**
(21) Application number: 21194400.4
(22) Date of filing: 01.09.2021
(51) Int. Cl.: E06B 3/30, B29C 65/02, B29C 65/00, E06B 3/96

(54) **A COMPOSITE PROFILE, METHOD OF CREATING A MITER JOINT BETWEEN TWO SUCH COMPOSITE PROFILES AND USE THEREOF**

(71) Applicant: Deceuninck NV, 8830 Hooglede-Gits (BE)
(72) Inventor: Degrande, Peter, 8830 Hooglede-Gits (BE); Van Der Eecken, Niki, 8830 Hooglede-Gits (BE); Vanalderweireldt, Karel, 8830 Hooglede-Gits (BE)
(74) Representative: BiiP cvba

(57) **Abstract**

A composite profile comprising a polymeric core (1) and a side profile (2, 2', 2") configured to be provided on an external surface of said core profile (1), said composite profile having a longitudinal direction Y, a depth direction X perpendicular to the Y-direction and a height direction Z, perpendicular to the X and Y directions, wherein said polymeric core profile (1) and said side profile (2, 2', 2") comprise a first set of coupling means for attaching the side profile (2, 2', 2") in a first position on the polymeric core profile (1) and a second set of coupling means for attaching the side profile (2, 2', 2"in a second position on the polymeric core profile (1), wherein the side profile (2, 2', 2") is repositioned over a distance D in the Z-direction when coupling the side profile (2, 2', 2") and polymeric core (1) profile with the second set of coupling means versus a coupling with the first set of coupling means.

## Description

### Field of the Invention

The present invention relates to composite profiles and in particular composite profiles used for creating miter joints such as for the assembly of window or door frames. The present invention also relates to a method for creating such miter joint.

### Background to the Invention

It is common knowledge that a door or window frame comprises profiles assembled together by a miter joint. For the production of a window or door frame starting from composite profiles comprising, in cross section, a first part made of a heat-weldable material and a second part made of a non heat-weldable material or a material that is heat-weldable under very different condition than the material of the first part, heat-welding two composite profiles to obtain a miter joint is not straightforward.

Typically, the first part can be made of PVC, and the second part can be made of metal, for example aluminum, wood or any other material. The first part and the second part are generally assembled by crimping or another reliable and strong connection technique to form the composite profile. In this way, the parts of the composite profile made of the different materials are integral with each other and allow the composite profile to be worked as if it were made of a homogeneous material during, for example, flow, drainage or more operations or more generally machining that it will undergo.

In order to save time during the assembly of a frame, one technique comprises of cutting or sawing the composite profiles to a desired length under 45° with both the heat-weldable material part and the non heat-weldable part already connected to one another in a definitive manner.

The assembly of a PVC window or door frame is generally done by heat-welding the concerned profiles. The sections are previously cut at 45 ° and then joined by welding to form a window or door frame. This welding operation ensures both the structural assembly of the frame and also its tightness by the fusion of the PVC. However, this assembly technique cannot be envisaged for profiles made from non-weldable materials. The assembly of an aluminum frame is generally carried out only by a mechanical connection of the various profiles of the frame, coupled or not by gluing and/or an attached seal in the form of a sealing pad or gasket. The mechanical assembly of the profiles of aluminum uses one or more brackets which are fixed by screwing or crimping.

In a known embodiment, PVC/Alu composite profiles are brought together by welding the PVC parts. To allow welding, which consumes a part of the PVC, the PVC zones can be debited in excess with respect to the aluminum zones, as is described for example in document EP1111181. In this way, the weld will consume the extra length of PVC until the aluminum parts abut. Recovery operations are then available to bond the aluminum parts, operations which are similar to the usual aluminum profile assembly operations as described above; these recovery operations constitute additional process steps to the assembly process of the PVC parts, causing their share of uncertainty as for the quality and the tightness of the final assembly.

FR3087147 discloses an alternative assembly process to miter join two composite profiles, whereby heat-weldable inserts are introduced in cavities in the composite profiles in such a way that part of the inserts protrudes from the composite profile ends that are cut or sawn under 45°. Upon assembly, the protruding sections of the inserts are heat-welded together to obtain a miter joint between both composite profiles. This process however has the disadvantage that the inserts need to be custom-made for the specific composite profiles to ensure a definitive fit between the inserts and the composite profiles in which these are inserted. Also the introduction of the inserts into the composite profiles composes a critical step of the process as sufficient heat-weldable material of the inserts should protrude from the composite profiles to ensure a strong and definitive bond between the two composite profiles making up the miter joint.

From the above, it is clear that there remains a market need for composite profiles that can be joined in a miter joint in a fool-proof manner with a guaranteed joining strength, without incurring overly cumbersome and costly process steps for the assembly process and that allows guaranteeing wind- and watertight connection of the composite profiles.

### Summary of the Invention

The present invention addresses the above problem by providing a composite profile comprising a polymeric core and a side profile configured to be provided on an external surface of said core profil, said composite profile having a longitudinal direction Y, a depth direction X perpendicular to the Y-direction and a height direction Z, perpendicular to the X and Y directions, wherein said polymeric core profile and said side profile comprise a first set of coupling means for attaching the side profiles in a first position on the polymeric core profile and a second set of coupling means for attaching the side profiles in a second position on the polymeric core profile, wherein the side profile is repositioned over a distance A in the Z-direction when coupling the side profile and polymeric core profile with the second set of coupling means versus a coupling with the first set of coupling means.

The present invention also concerns a method of creating a miter joint of two composite profiles, the method comprising the steps of:
- providing two composite profiles each comprising a polymeric core and a side profile configured to be provided on an external surface of said core profil, said composite profiles having a longitudinal direction Y, a depth direction X perpendicular to the Y-direction and a height direction Z, perpendicular to the X and Y directions, wherein said polymeric core profile and said side profile comprise a first set of coupling means for attaching the side profiles in a first position on the polymeric core profile and a second set of coupling means for attaching the side profiles in a second position on the polymeric core profile, wherein the side profile is repositioned over a distance A in the Z-direction when coupling the side profile and polymeric core profile with the second set of coupling means versus a coupling with the first set of coupling means;
- positioning the side profile in the first position on the polymeric core profile; and subsequently
- sawing or cutting each of the composite profiles to a predetermined length under under an angle of between 5° and 85°, the angles allowing joining both both composite profile in a miter joint; subsequently
- repositioning the side profile of each composite profile from the first position to the second position on the polymeric core profile, thereby creating a section of the polymeric core profile at the sawed or cut edges to protrude from the side profile;
- welding together two facing protruding sections of the composite profiles to create the miter joint.

The polymeric core profile preferably comprises exterior walls defining a cavity divided in multiple chambers separated by inner walls.

Said polymeric core profile preferably lacks a metallic reinforcement profile provided in any of said chambers.

The side profile is preferably made of a metal, preferably aluminium or steel.

The polymeric core profile is preferably made of polyvinyl chloride (PVC).

In the second position, the side profile preferably covers a larger part of the concerning exterior surface of the polymeric profile than in the first position.

The distance D, over which the side profile (2, 2', 2") is repositioned in the Z-direction when coupling the side profile (2, 2', 2") and polymeric core (1) profile with the second set of coupling means versus a coupling with the first set of coupling means, preferably ranges between 1 and 5 mm, preferably between 1,5 and 4 mm.

### Brief Description of the appended Figures

- Figure 1 schematically shows an exploded view of a composite profile according to the present invention, with a core profile and a side profile;
- Figure 2a&b show a cross-sectional view of the composite profile in Fig. 1, in two different positions of the side profile versus the core profile;
- Figure 3 schematically shows a method of creating a miter joint according to the present invention;
- Figure 4 illustrates some method steps of a method according to the present invention;
- Figure 5 schematically illustrates an exploded view of a composite profile according to the present invention, with a core profile and two side profiles;
- Figure 6a&b&c show a cross-sectional view of the composite profile in Fig. 5, in two different positions of the side profile versus the core profile, and in an assembled state with glass pane;
- Fig. 7 schematically shows a method of creating a window frame according to the present invention;
- Fig. 8 illustrates some method steps of a method according to the present invention with composite profiles of Fig. 5;
- Fig. 9, 10 each show an alternative embodiment of the present invention as Fig. 6c;
- Fig. 11 shows another embodiment of the present invention as illustrated in Fig. 6a&b.

### Detailed Description of the Invention

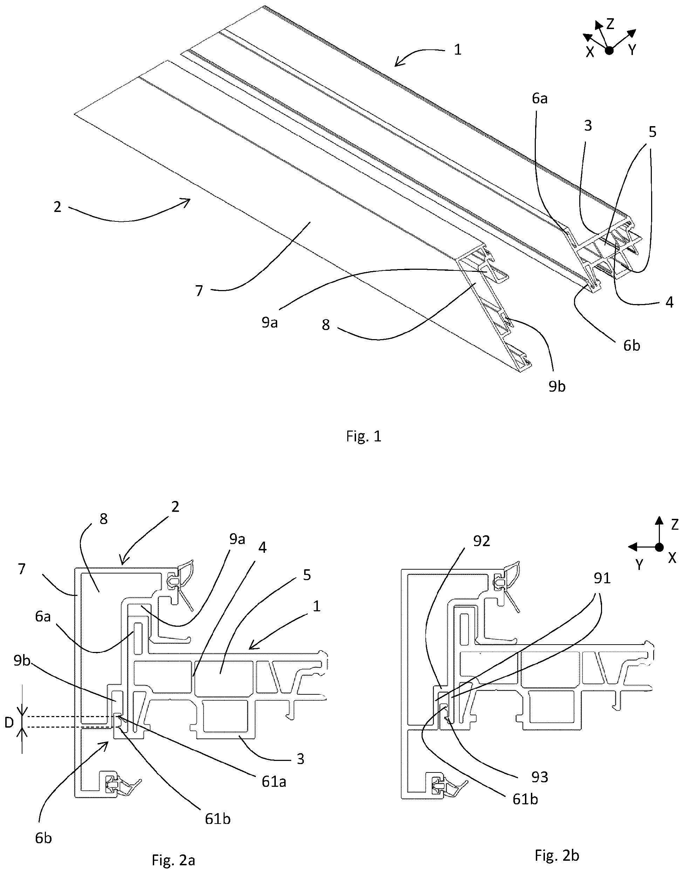

A composite profile according to the present invention comprises, as illustrated in Fig. 1, a polymeric core profile 1 and at least one side profile 2.

The core profile 1 is made of a weldable polymeric material such as polyvinyl chloride (PVC) and is configured as an elongated structure having a length direction X, a depth or width direction Y, normal to the X-direction and a height direction Z, normal to the X- and Y-directions.

In the embodiment of Fig. 1, the core profile is configured as a hollow elongated profile exterior walls 3 delimiting an inner cavity and inner walls 4 subdividing the inner cavity in a plurality of chambers 5. Both the exterior walls 3 and inner walls 4 extend in the longitudinal direction X of the polymeric core profile that is manufactured by an extrusion process. One or more of the chambers 5 may be filled with a foam or other insulative material or may hold an elongated reinforcement profile not shown in the figures. The exterior and/or inner walls 3&4 of the polymeric profile may comprise strips reinforcing materials embedded therein.

In accordance with the invention, the polymeric core profile comprises coupling means 6 configured to cooperate with coupling means provided on the side profile. In the embodiment of Fig. 1, said coupling means provided on the polymeric core profile are comprised of a longitudinally extending upstanding rim 6a and of a longitudinal groove 6b both defined by the exterior walls 3. The longitudinal groove 6b is in this case defined between two portions of the exterior side walls, which portions extend in spaced apart planes parallel to the X and Z-directions and has a depth measured from an open side in the Z-direction. Along on of the above-mentioned portions of the exterior side walls and facing the inside of the groove 6b, two slots 61a & 61b are provided parallel to and at a distance D of one another, the slots 61a & 61bextending over the entire length of the groove in the X-direction.

The side profile 2 is preferably made in a non-heat weldable material, such as a metal and preferably in aluminium or steel. This however does not exclude the use of polymeric side profiles in a composite profile of the invention, as the invention is also perfectly suitable hen one wishes to use side profiles that are not suitable for welding because of a cover or decorative layer in a non-weldable material or just because of the wish to avoid an exposed welding line. In the embodiment of Fig. 1 and 2, the side profile 2 is made of a metal and is configured as an elongated structure having a length according to the X-direction, a depth or width according to the Y-direction, and a height according to the Z-direction and has an outer wall 7 defining an inner cavity 8.

In accordance with the invention, the side profile 2 comprises coupling means 9 configured to cooperate with the coupling means 6 provided on the core profile in such a manner that the side profile can be attached to the core profile 1 in two distinct positions, namely a first position and a second position, wherein the side profile 2 is repositioned in view of the core profile 1 over a distance D in the Z-direction. In the embodiment of Fig. 1 & 2, the coupling means 9 of the side profile are comprised of two grooves extending parallel to one another in the X-direction and that are spaced apart from one another in the Z-direction. A first groove 9a, configured to co-operate with the upstanding rim 6a on the core profile and a second groove 9b, having a U-shaped cross section with two side walls 91 and a bottom wall 92, whereby on one of said side walls 91 a protruding rim 93 is provided facing to the inside of the groove 9b and extending over the entire length of the groove 9b in the X-direction.

The side profile and core profile of the invention can be assembled in two different mutual positions. A first position -illustrated in Fig. 2a- wherein the upstanding rim 6a of the core profile is lodged in the first groove 9a of the side profile 2 and wherein the protruding rim 93 of the side profile is clipped into a first slot 61a of the core profile; and a second position - illustrated in Fig. 2b- wherein the upstanding rim 6a of the core profile is lodged in the first groove 9a of the side profile 2 and wherein the protruding rim 93 of the side profile is clipped into a second slot 61a of the core profile 1. The difference between both positions is hereby a shift of the side profile versus the core profile in the Z-direction over the distance D separating the first and second grooves 61a & 61b of the coupling means of the core profile.

In this case, the coupling means including the upstanding rim 6a and the first slot 61a of the core profile and the first groove 9a and the protruding rim 93 of the side profile form a first set of coupling means as they form or are part of the connection between the core profile and the side profile in the first position. The upstanding rim 6a and the second slot 61b of the core profile and the first groove 9a and the protruding rim 93 of the side profile form a second set of coupling means as they form or are part of the connection between the core profile and the side profile in the second position. Preferably, the side profile (2) covers a larger area of the concerned exterior wall of the core profile when attached thereto in the second position than when attached thereto in the first position. In a most preferred embodiment, the side profile (2) covers the entire exterior wall at one side of the core profile when attached thereto in the second position.

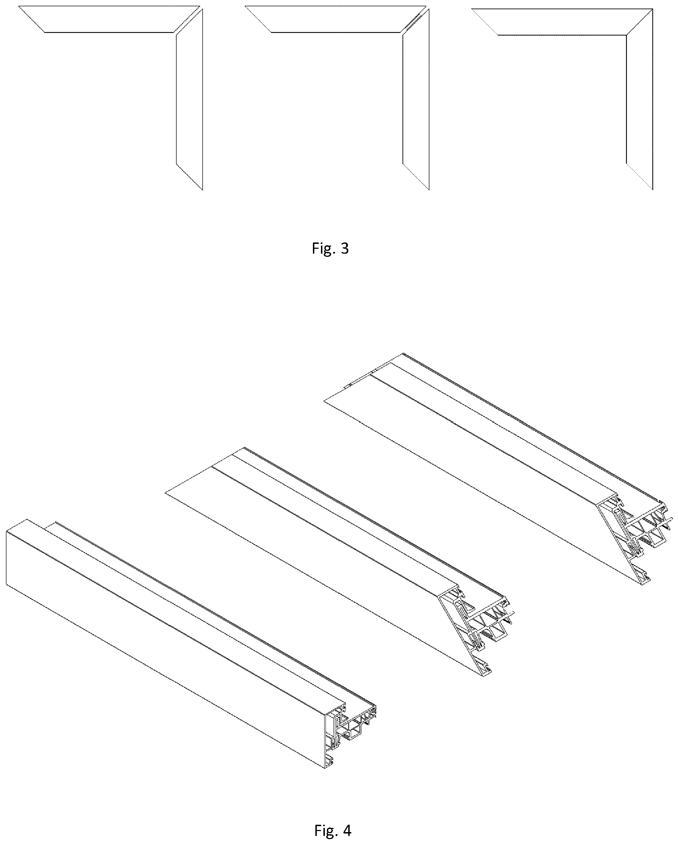

Fig. 3 & 4 illustrate a method of the invention of creating a miter joint of two composite profiles according to the present invention, whereby two composite profiles each comprising a polymeric core and a side profile configured to be provided on an external surface of said core profil in a first position
- positioning the side profile in the first position on the polymeric core profile; and subsequently
- sawing or cutting each of the composite profiles to a predetermined length under under an angle of between 5° and 85°, preferably 45°, the angles allowing joining both both composite profile in a miter joint; subsequently
- repositioning the side profile of each composite profile from the first position to the second position on the polymeric core profile, thereby creating a section of the polymeric core profile at the sawed or cut edges to protrude from the side profile;
- welding together two facing protruding sections of the composite profiles to create the miter joint.

In case of the embodiment in Fig. 1 to 4, the repositioning of the side profile can be performed by a simple shift of the side profile versus the polymeric core profile in the Z-direction. Depending on the design or configuration of the connection means on both the core profile and the concerned side profile, repositioning may imply removing the side profile from the first position on the core profile and rejoining the side profile to the core profile in the second position.

As is shown in Fig. 3, the repositioning of the side profile results in exposing a transversal end portion of the core profile that now perks out over a distance D from the concerning end portion of the side profile. The distance D is hereby preferably chosen between 1 and 5 mm and is preferably determined on the amount of material of the core profile is to be molten for creating the miter joint by welding. The side profile that is now in the second position can as such be kept at a distance D from the heat applied to the end portion of the core profile during welding and, the end portion of the side profile can effectively serve as an abutment for the welding process, when pressing both composite profiles of the miter joint together. The current invention as such allows for creating a well-defined miter joint weld and non-welded side profiles abutting one another perfectly in the miter joint.

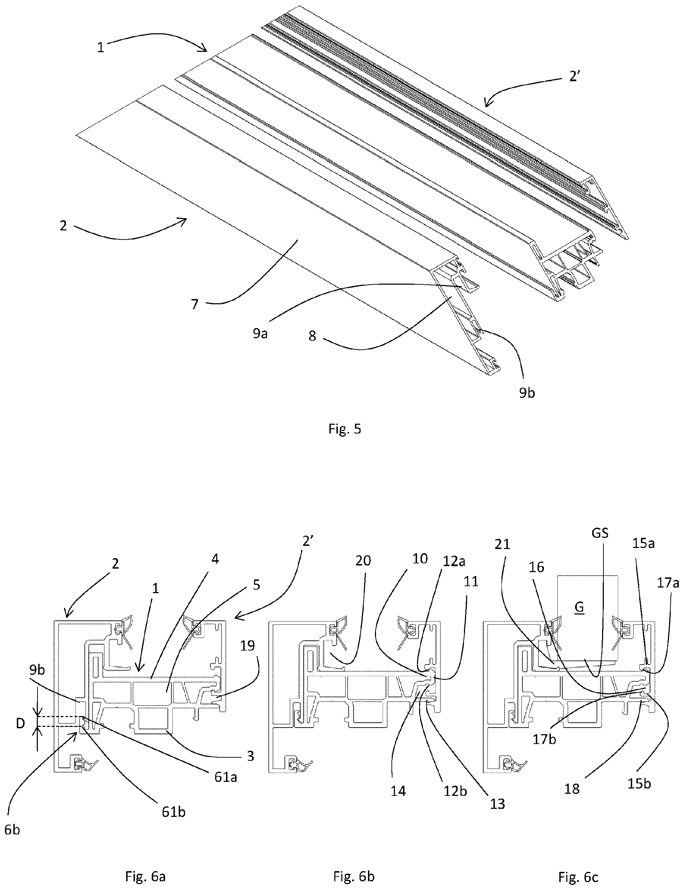

Fig. 5 to 8 show a second embodiment of the current invention. In the Fig. 5, 6 & 8 a window profile is shown having a polymeric core profile 1 and two side profiles 2&2' provided at opposed longitudinal sides of the polymeric core profile. The fist side profile 2 is in this case identical to the side profile described with reference to Fig. 1&2 and thus is configured to be connected to the core profile in two positions and with connection means 9. The second side profile 2', is preferably made in a non-heat weldable material, such as a metal and preferably in aluminium or steel. This however does not exclude the use of polymeric side profiles in a composite profile of the invention, as the invention is also perfectly suitable hen one wishes to use side profiles that are not suitable for welding because of a cover or decorative layer in a non-weldable material or just because of the wish to avoid an exposed welding line. In the embodiment of Fig. 5 & 6, the side profile is made of a metal and is configured as an elongated structure having a length according to the X-direction, a depth or width according to the Y-direction, and a height according to the Z-direction.

In the illustrated embodiment, both side profiles 2&2' act as glass rebates for a glass pane G received in the window, while the core profile defines a bottom portion of a glass receiving zone, i.e. the part of the composite profile facing the side edge GS of the glass pane G.

In this case the core 1 profile comprises primary coupling means 6 that are in this case identical to the coupling means 6 described with reference to Fig. 1 & 2 and configured to cooperate with the coupling means 9 of the first side profile 2; and secondary coupling means 6' extending longitudinally along the length of the second side profile 2' and which comprise a -in cross-sectional view- mushroom like protrusion with a stem 10, a cap 11 and two shoulder portions 12a&12b, one at each side of the cap between said cap and the stem; and a protruding rim 13 extending at a same side of the core profile and parallel to the mushroom like protrusion thereby defining a groove 14 between the protruding rim 13 and the mushroom like protrusion.

The second side profile 2' comprises coupling means configured to cooperate with secondary coupling means 10-13 provided on the core profile in such a manner that the side profile can be attached to the core profile 1 in two distinct positions, namely a first position and a second position, wherein the side profile 2 is repositioned in view of the core profile 1 over a distance D in the Z-direction. In the embodiment of Fig. 5 & 6, the coupling means of the second side profile 2' comprise two hook like protrusions 15a&b defining a groove 16 between them and with the hooks 17a&b facing one another; and a protruding rim 18 extending parallel next to the groove 16 thereby defining a longitudinal slot 19 between the protruding rim 18 and one of the hook like protrusions 17b.

The second side profile 2' and core profile 1 of the invention can be assembled in two different mutual positions. A first position -illustrated in Fig. 6a- wherein one of the hook like protrusions 15b and the protruding rim 18 are clipped in the slot 12 defined between the mushroom like protrusion 10-12 and the protruding rim 11 of the secondary coupling means of the polymeric core profile 1; and a second position -illustrated in Fig. 6b- wherein the other of the hook like protrusions 15a is clipped behind one of the shoulders 12a the mushroom like protrusion and wherein the protruding rim 11 of the secondary coupling means of the core profile 1 is lodged in the slot 19.

In this embodiment, the second side profile can only be repositioned in view of the core profile by removal and reattachment thereof from the core profile.

Fig. 6c shows a cross section of an assembled window wing frame, wherein both side profiles are attached to the core profile in the second position. In this case, the first side profile 2 that defines a fixed glass rebate of the window comprises a slot 20 wherein a glass bridge 21 is lodged that is configured to abut the side edge GS of the glass pane of the window. Such configuration of the window allows use of the first side profile as an effective reinforcement of the core profile, as the weight of the glass pane is at least partially deflected to the first side profile. Such deflection of at least part of the forces exerted on the composite profile may allow designing the polymeric core profile without any metallic reinforcement to be provided in one of its chambers 5. Additionally, the glass pane here locks the first side profile in the second position versus the (welded) core profile, as it prevents shifting of the first side profile in a direction from the second position to the first position versus the core profile.

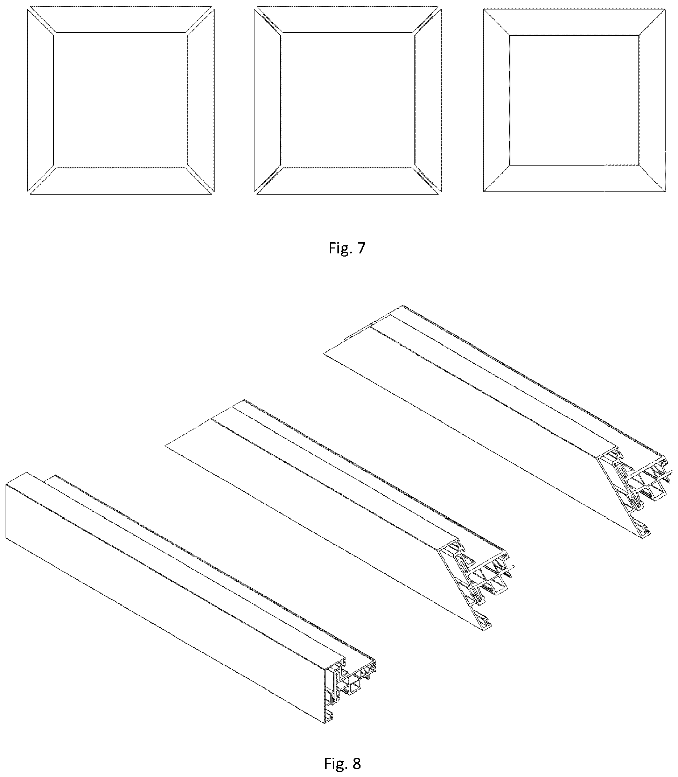

The method of creating a miter joint with this construction profile is very similar to the method described above, with that difference that in this embodiment, as illustrated in Fig. 7 & 8, both the first and second side profiles need to be repositioned for their first position on the core profile to their second position on that core profile after cutting or sawing the construction profiles and prior to welding the cut or sawn construction profiles in a miter joint.

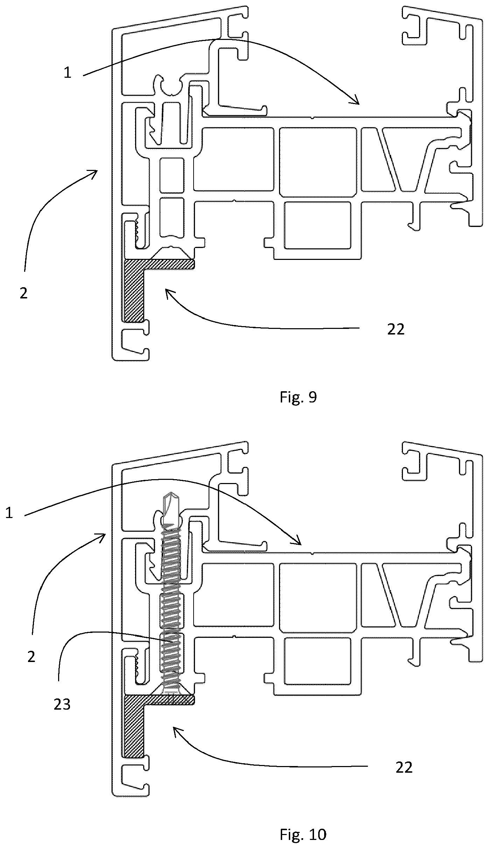

Fig. 9 shows another embodiment of the current invention, whereby the core profile and (first) side profile is similar to the ones shown in the Fig. 1, 2, 5 and 6, but wherein the (first) side profile is blocked in its second position to the core profile from shifting to its first position by a wedge 22. In the embodiment of Fig. 10, said wedge 22 is fixed to the side profile by a screw 23.

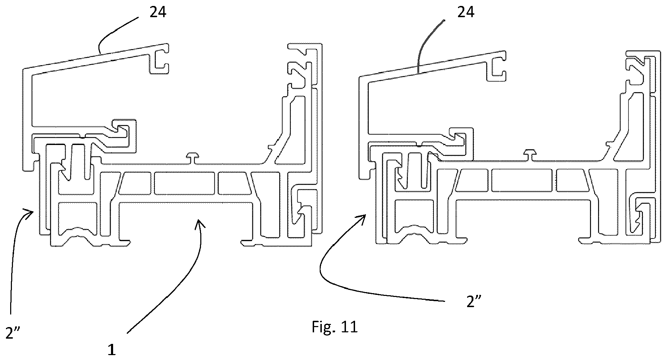

Fig. 11 shows yet another embodiment of the current invention, whereby the (first) side profile 2" comprises an auxiliary profile 24 removably attached thereto. In this case, the auxiliary profile 24 defines a glass rebate. The coupling means 9 for attaching the side profile to the core profile in two distinct positions are hereby part of the first side profile, while the auxiliary profile is connected to the side profile only.

In case of the embodiment shown in Fig. 11, to create a miter joint, two composite profiles are provided each with a core profile and a side profile 2" coupled thereto in the first position and with the auxiliary profile attached to the side profile 2". The composite profile are subsequently cut or sawed to a predetermined length under under an angle of between 5° and 85°, the angles allowing joining both both composite profile in a miter joint. Next, the auxiliary profiles are removed from their corresponding side profiles and the side profiles are repositioned on the core profiles from their first to their second position such that a section of the polymeric core profile at the sawed or cut edges protrudes from the side profile; after welding the sawed or cut edges protrudes of the core profile and hence creating the miter joint, the auxiliary profiles can be reattached to the side profiles, one by one or after connecting the auxiliary profiles to one another in a miter joint.

Although in the above description of the present invention, the coupling means 6&9 between the core profile and one of the side profiles are realized by a mechanical connection, in particular clipping, other coupling means can be utilized without departing from the current invention. Examples of other coupling means include but are not limited to: screws, adhesive strips, magnetic coupling means, snap fits, etc.

Further, providing a corner joint in the inner cavity of two miter joint side profiles may increase strength of the miter joint and may prevent the miter joint of the side profiles to open due to a difference in thermal expansion between the material of the core profile and the material of the side profile(s).

The composite profiles and method of the current invention can be applied for the production/assembly of window frames, door frames or any other type of construction frames such as frames delimiting architectural openings, for both structural (load bearing) frames and non-structural frames or miter joint profiles.

## Claims

1. A composite profile comprising a polymeric core (1) and a side profile (2, 2', 2") configured to be provided on an external surface of said core profile (1), said composite profile having a longitudinal direction Y, a depth direction X perpendicular to the Y-direction and a height direction Z, perpendicular to the X and Y directions, wherein said polymeric core profile (1) and said side profile (2, 2', 2") comprise a first set of coupling means for attaching the side profile (2, 2', 2") in a first position on the polymeric core profile (1) and a second set of coupling means for attaching the side profile (2, 2', 2"in a second position on the polymeric core profile (1), wherein the side profile (2, 2', 2") is repositioned over a distance D in the Z-direction when coupling the side profile (2, 2', 2") and polymeric core (1) profile with the second set of coupling means versus a coupling with the first set of coupling means.

2. The composite profile according to claim 1, said polymeric core profile (1) comprising exterior walls (3) defining a cavity divided in multiple chambers (5) separated by inner walls (4).

3. The composite profile according to claim 2, said polymeric core profile (1) lacking a metallic reinforcement profile provided in any of said chambers (5).

4. The composite profile according to any of the preceding claims, said side profile (2, 2', 2") being made of a metal, preferably aluminium or steel.

5. The composite profile according to any of the preceding claims, said polymeric core profile (1) being made of polyvinyl chloride (PVC).

6. The composite profile according to any of the preceding claims, whereby in the second position, the side profile covers a larger part of the concerning external surface of the polymeric profile than in the first position.

7. The composite profile according to any of the preceding claims, the distance D, over which the side profile (2, 2', 2") is repositioned in the Z-direction when coupling the side profile (2, 2', 2") and polymeric core (1) profile with the second set of coupling means versus a coupling with the first set of coupling means, ranges between 1 and 5 mm, preferably between 1,5 and 4 mm.

8. A method of creating a miter joint of two composite profiles, the method comprising the steps of:
• providing two composite profiles each comprising a polymeric core and a side profile configured to be provided on an external surface of said core profil, said composite profiles having a longitudinal direction Y, a depth direction X perpendicular to the Y-direction and a height direction Z, perpendicular to the X and Y directions, wherein said polymeric core profile and said side profile comprise a first set of coupling means for attaching the side profiles in a first position on the polymeric core profile and a second set of coupling means for attaching the side profiles in a second position on the polymeric core profile, wherein the side profile is repositioned over a distance A in the Z-direction when coupling the side profile and polymeric core profile with the second set of coupling means versus a coupling with the first set of coupling means;
• positioning the side profile in the first position on the polymeric core profile; and subsequently
• sawing or cutting each of the composite profiles to a predetermined length under under an angle of between 5° and 85°, the angles allowing joining both both composite profile in a miter joint; subsequently
• shifting the side profile of each composite profile from the first position to the second position on the polymeric core profile, thereby creating a section of the polymeric core profile at the sawed or cut edges to protrude from the side profile;
• welding together two facing protruding sections of the composite profiles to create the miter joint.

9. The method according to claim 9, wherein both composite profiles are welded together until the side profiles of both composite profiles abut one another at their facing sawn or cut edges.

10. The method according to claim 9 or 10, providing a corner joint profile in both composite profiles prior to welding these together.

11. Use of a composite profile as identified in any of claims 1 to 8 and/or of a method as identified in any of claims 9 to 11 for assembling a window or door frame.
